Europäisches Patentamt

European Patent Office

Office européen des brevets

(11) Veröffentlichungsnummer: **0 012 481**
A1

(12) **EUROPÄISCHE PATENTANMELDUNG**

(21) Anmeldenummer: **79200736.1**

(22) Anmeldetag: **07.12.79**

(51) Int. Cl.³: **B 29 C 17/07**

(30) Priorität: **16.12.78 DE 2854388**

(43) Veröffentlichungstag der Anmeldung: **25.06.80**
**Patentblatt 80/13**

(84) Benannte Vertragsstaaten: **DE FR GB IT SE**

(71) Anmelder: **CHEMISCHE WERKE HLS AKTIENGESELLSCHAFT, Postfach 1320, D-4370 Marl 1 (DE)**

(72) Erfinder: **Neundorf, Uwe, Freiligrathstrasse 2, D-4272 Kirchhellen (DE)**
Erfinder: **Seidel, Eckhard, Rottstrasse 48, D-4350 Recklinghausen (DE)**

(74) Vertreter: **Steil, Hanna, Dipl.-Chem. et al, RSP PATENTE-PB 40 Herzogstrasse 28 Postfach 2840, D-4690 Herne 2 (DE)**

(54) **Verfahren zur einstufigen Herstellung von Hohlkörpern aus teilkristallinen Propylenhomopolymerisaten oder Propylen-Aethylen-Copolymerisaten.**

㉗ Die einstufige Herstellung von Hohlkörpern aus teilkristallinen Polypropylen oder Propylen-Äthylen-Copolymerisaten erfolgt unter Zusatz von Benzoesäure in Mengen von 0,05 bis 1%, wobei der Vorformling auf eine Temperatur von 10–60°C unterhalb des Schmelzbereiches der Polymeren gekühlt, anschliessend wieder zur Verstreckung auf 1–20°C unterhalb des Schmelzbereiches erwärmt und biaxial verstreckt wird.

EP 0 012 481 A1

0012481

Gelsenkirchen-Scholven, den 8. Dez. 1978

Veba-Chemie Aktiengesellschaft
Gelsenkirchen-Buer

Verfahren zur einstufigen Herstellung von Hohlkörpern aus teilkristallinen Propylenhomopolymerisaten oder Propylen-Aethylen-Copolymerisaten

<u>Beschreibung und Beispiele</u>

Die Erfindung betrifft ein verbessertes Verfahren zum Streckblasen von Hohlkörpern aus Polypropylen bzw. Propylen-Aethylen-Copolymerisaten.

Streck-Blas-Verfahren zeichnen sich dadurch aus, daß man zuerst einen Vorformling herstellt, der anschließend konditioniert, axial verstreckt und gleichzeitig oder danach aufgeblasen wird.

Durch die Verstreckung werden die Eigenschaften des eingesetzten Materials verbessert, z.B. Transparenz, Schlagzähigkeit, besonders bei tiefen Temperaturen, Festigkeit, Steifigkeit und Oberflächenglanz. Weiterhin wird die Permeation für Gase und Wasserdampf verringert.

Beim Streckblasen sind die verschiedensten Thermoplaste einzusetzen, wobei allerdings zwischen amorphen und teilkristallinen Thermoplasten deutlich unterschieden werden muß.

Amorphe Thermoplaste bilden bei der Abkühlung ein Gefüge von ungeordnet neben bzw. ineinanderliegenden Polymerketten. Besondere Gefügestrukturen bilden sich nicht.

Bei teilkristallinen Thermoplasten ordnen sich die Polymerketten beim Erstarren teilweise zu geordnet nebeneinanderliegenden Bereichen. Aus diesen Bereichen bilden sich zeitabhängige Kristallite und teilweise weitere Überstrukturen (Sphärolite).

Beim Streckblasen von amorphen Thermoplasten (PVC) kann deshalb der Vorformling sofort nach Abkühlen von Verarbeitungstemperatur auf die Verstrecktemperatur verstreckt und aufgeblasen werden. Beim Streckblasen von teilkristallinen Thermoplasten ergibt eine gleiche Verfahrensweise wie bei amorphen Thermoplasten keine Verbesserung der Eigenschaften. Der Vorformling muß vielmehr bei teilkristallinen Thermoplasten erst auf eine Temperatur abgekühlt werden, die deutlich unterhalb der Verstrecktemperatur liegt. Bei dieser Temperatur muß der Vorformling so lange verweilen, bis sich genügend Kristalle gebildet haben. Erst danach kann auf die Verstrecktemperatur erwärmt, verstreckt und aufgeblasen werden.

Die bei teilkristallinen Thermoplasten notwendige Kristallisationszeit verlängert den Herstellungsprozeß erheblich. Aus diesem Grunde sind die bisher bekannten Verfahren der Herstellung von streckgeblasenen Flaschen aus Polypropylen sog. 2-stufige Verfahren. In der ersten Stufe wird der Vorformling hergestellt und auf Raumtemperatur abgekühlt. In der zweiten Stufe wird der Vorformling wieder aufgeheizt, axial verstreckt und aufgeblasen.

Diese Art der Herstellung ist aber sehr aufwendig und zeitraubend. So müssen die Vorformlinge an einem anderen als dem Herstellungsort gelagert und transportiert werden. Zusätzlich werden erhöhte Energiemengen verbraucht.

Es war daher Aufgabe der Erfindung ein verbessertes Streck-Blas-Verfahren für teilkristallines Polypropylen bzw. teilkristalline Aethylen-Propylen-Copolymerisate zu entwickeln, das die aufwendige Zwei-Stufen-Behandlung ausschließt und erlaubt, das Verfahren einstufig durchzuführen.

Dabei stellte sich heraus, daß die Kristallbildung bei Anwendung von mit Benzoesäure versetzten Propylenpolymerisaten für die Hohlkörperherstellung bereits bei nur überraschend geringfügig unter dem Schmelzbereich gesenkter Temperatur und in besonders kurzer Zeit erfolgt.

Gegenstand der Erfindung ist daher ein Verfahren zur einstufigen Herstellung von Hohlkörpern aus teilkristallinen Propylenhomopolymerisaten oder Propylen-Aethylen-Copolymerisaten unter Zusatz von Benzoesäure in Mengen von 0,05 bis 1 %, dadurch gekennzeichnet, daß der Vorformling auf eine Temperatur von bis 60 $^{\circ}$C unterhalb des Schmelzbereiches der Polymeren gekühlt wird und anschließend auf die zur Verstreckung übliche Temperatur von 1$^{\circ}$ bis 20 $^{\circ}$C unterhalb des Schmelzbereiches wieder erwärmt und durch biaxiales Verstrecken zum Hohlkörper geformt wird.

0012481

Der Vorformling kann auf verschiedene Art hergestellt werden, z.B. durch Spritzgießen, Extrudieren, Extrusionsblasen. Dieser sich zunächst im Schmelzzustand befindliche Vorformling kann in Abhängigkeit von der Wanddicke in einer Zeit von 5 bis 50 Sekunden auf eine Temperatur von 100 bis 130 $^{o}$C abgekühlt und sofort ohne Unterbrechung innerhalb von 10 bis 50 Sekunden auf eine Temperatur von 130 $^{o}$C bis 160 $^{o}$C gebracht, hierbei axial verstreckt und zur Flasche aufgeblasen werden.

Nach dem beschriebenen Verfahren kann ein Hohlkörper mit einem Gewicht von 25 g ausgehend vom Granulat in einer Gesamtzeit von 50 bis 100 sek. hergestellt werden.

Das beanspruchte Verfahren ist mit gleich guten Ergebnissen für handelsübliche Homo- und Copolymerisate von Propylen geeignet, z.B. für ein Propylenhomopolymerisat mit einem Schmelzindex MFI 190/5 von 0,5 - 40g/10 min. oder für ein statistisches Copolymer aus Propylen und 0,3 bis 5,0 Gew.% Äthylen mit einem Schmelzindex MFI 190/5 von 0,5 - 40g/10 min.

Beispiel:

Das angewandte Polymer ist ein statistisches Copolymer aus Propylen und 3 Gew.% Aethylen mit einem Schmelzindex MFI 190/5 von 20g/10 min. Unter Zusatz von 0,1 % Benzoesäure wurden Hohlkörper unter folgenden Bedingungen geformt:

Verformungsbedingungen:

| | |
|---|---|
| Temperatur der Masse beim Spritzen | 240 $^{o}$C |
| Temperatur des Kühlmediums | 80 $^{o}$C |
| Kühlzeit | 20 sec. |
| Temperatur des Heizmediums | 150 $^{o}$C |
| Heizzeit | 30 sec. |
| Zykluszeit einschließlich Strecken und Blasen | 72 sec. |

| | |
|---|---|
| Gewicht des Vorformlings | 25 g |
| Wanddicke | 2 mm |
| Außendurchmesser | 46 mm |
| Länge | 100 mm |
| axiale Verstreckung | ca. 2-fach |
| radiale Verstreckung | ca. 2-fach |
| Form des Hohlkörpers | zylindrisch |
| durchschnittliche Wanddicke des Hohlkörpers | ca. 0,4 mm |
| Volumen des Behälters | ca. 1 l |

An den so hergestellten Hohlkörpern wurden folgende Werte gemessen:

| Material | Verfahren | Schlagzugzähigkeit ($mJ/mm^2$) | | Schubmodul ($N/mm^2$) | | Fallbruchfestigkeit $H_{50}$ (m) |
|---|---|---|---|---|---|---|
| | | 0$^{o}$C | 20$^{o}$C | 0$^{o}$C | 20$^{o}$C | 0$^{o}$C |
| PP-Copolymer 0,1 % Benzoesäure | Streckblasen, einstufig | 1160 | 1330 | 1500 | 1030 | 4,0 |

Gelsenkirchen-Scholven, den 8. Dez. 1978

Veba-Chemie Aktiengesellschaft
Gelsenkirchen-Buer

---

Verfahren zur einstufigen Herstellung von Hohlkörpern aus teilkristallinen Propylenhomopolymerisaten oder Propylen-Aethylen-
Copolymerisaten

---

## Patentanspruch

Verfahren zur einstufigen Herstellung von Hohlkörpern aus teilkristallinen Propylenhomopolymerisaten oder Propylen-Aethylen-
Copolymerisaten unter Zusatz von Benzoesäure in Mengen von 0,05
bis 1 %, d a d u r c h g e k e n n z e i c h n e t , daß
der Vorformling auf eine Temperatur von 10 $^\circ$ bis 60 $^\circ$C unterhalb
des Schmelzbereiches der Polymeren gekühlt wird und anschließend
auf die zur Verstreckung übliche Temperatur von 1 bis 20 $^\circ$C unterhalb des Schmelzbereiches wieder erwärmt und durch biaxiales
Verstrecken zum Hohlkörper geformt wird.

# EUROPÄISCHER RECHERCHENBERICHT

**Europäisches Patentamt**

0012481

Nummer der Anmeldung

EP 79 10 0756

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| PX | KUNSTSTOFFE, vol. 69, Februar 1979, München,DE<br>U. NEUNDORF et al. "Streckblasen von Polypropylen", Seiten 67-71.<br> * Insgesammt * | 1 |
| | -- | |
| | FR - A - 2 389 479 (CARNAUD TOTAL)<br> * Seite 3, Zeilen 13-33; Beispiel 2, Ansprüche * | 1 |
| | -- | |
| | FR - A - 1 485 255 (PHILLIPS PETROLEUM)<br> * Seite 3, linke Spalte; Beispiel 1; Zusammenfassung, Punkte 1,2 * | 1 |
| | -- | |
| | US - A - 4 048 409 (YASUNORI SUGITA et al. )<br> * Spalte 2, Zeilen 35-52; Spalte 3, Zeilen 1-7; Spalte 5, Zeilen 3-60; Ansprüche * | 1 |
| | -- | |
| | US - A - 3 600 487 (F. ZAVASNIK)<br> * Insgesammt * | 1 |
| | -- | |
| A | FR - A - 2 239 332 (UNILEVER) | |
| A | DE - A - 2 022 465 (LEIFELD) | |
| | ---- | |

**KLASSIFIKATION DER ANMELDUNG (Int.Cl. 3)**

B 29 C 17/07

**RECHERCHIERTE SACHGEBIETE (Int. Cl. 3)**

B 29 C 17/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-03-1980 | LABEEUW |

EPA form 1503.1 06.78